# EUROPÄISCHE PATENTANMELDUNG

(11) **EP 2 071 245 A2**
(43) Veröffentlichungstag der Anmeldung: **17.06.2009**
(21) Anmeldenummer: 08021435.6
(22) Anmeldetag: 10.12.2008
(51) Int. Cl.: F24D 12/02, F24D 19/10

(54) **Heizungsanlage**

(30) Priorität: 16.12.2007 DE 102007061415
(71) Anmelder: Viessmann Werke GmbH & Co. KG, 35107 Allendorf (DE)
(72) Erfinder: Hafner, Bernd, Dr., 35108 Allendorf (DE)
(74) Vertreter: Wolf, Michael

(57) **Zusammenfassung**

Die Erfindung betrifft eine Heizungsanlage, umfassend mindestens zwei Wärmeerzeuger (1, 2), die jeweils mindestens eine Schalteinheit (3) zur Steuerung wärmeerzeugerinterner Abläufe aufweisen, wobei jede Schalteinheit (3) mit einer übergeordneten Zentralregeleinheit (4) zur Koordination des hydraulischen Zusammenwirkens der Wärmeerzeuger (1, 2) verbunden ist, wobei die Zentralregeleinheit (4) zur initialen Abspeicherung eines Hydraulikverschaltungsplans der Wärmeerzeuger (1, 2) ausgebildet ist. Nach der Erfindung ist vorgesehen, dass mindestens einer der Wärmeerzeuger (1, 2) die Zentralregeleinheit (4) als integralen Bestandteil aufweist.

## Beschreibung

Die Erfindung betrifft eine Heizungsanlage gemäß dem Oberbegriff des Patentanspruchs 1.

Eine Heizungsanlage der eingangs genannten Art ist an sich bekannt. Sie besteht aus mindestens zwei Wärmeerzeugern (zum Beispiel: Heizkessel, Solaranlage, Wärmepumpe etc.) und typischerweise einem Wärmespeicher (in der Regel ein Warmwasserspeicher), wobei die Wärmeerzeuger jeweils mindestens eine Schalteinheit zur Steuerung wärmeerzeugerinterner Abläufe aufweisen (also eine elektrische bzw. elektronische Schaltung, die dafür verantwortlich ist, die internen Komponenten des Wärmeerzeugers miteinander zu verknüpfen), wobei jede Schalteinheit mit einer übergeordneten Zentralregeleinheit (bekannt ist hier zum Beispiel die in einem eigenen Regelungsgehäuse untergebrachte Kaskadenregelung Vitotronic® 333 der Anmelderin) zur Koordination des hydraulischen Zusammenwirkens insbesondere der Wärmeerzeuger, aber auch des Wärmespeichers verbunden ist, wobei die Zentralregeleinheit zur initialen Abspeicherung eines Hydraulikverschaltungsplans der Wärmeerzeuger und gegebenenfalls des Wärmespeichers ausgebildet ist, d. h. insbesondere bei Inbetriebnahme der Heizungsanlage wird der Zentralregeleinheit vom Betreiber mitgeteilt, wie die Wärmeerzeuger und Wärmespeicher hydraulisch miteinander verknüft sind, wie sie also miteinander zusammenarbeiten können.

Der Erfindung liegt die Aufgabe zugrunde, eine Heizungsanlage der eingangs genannten Art kostengünstiger herstellen und anbieten zu können.

Diese Aufgabe ist mit einer Heizungsanlage der eingangs genannten Art durch die im Kennzeichen des Patentanspruchs 1 aufgeführten Merkmale gelöst.

Nach der Erfindung ist also vorgesehen, dass mindestens einer der Wärmeerzeuger die Zentralregeleinheit als integralen Bestandteil aufweist.

Mit anderen Worten ausgedrückt, wird die Zentralregeleinheit in mindestens einen der Wärmeerzeuger integriert, so dass ein separates Gehäuse verzichtbar ist. Darüber hinaus, und das ist noch wesentlicher, hat diese Maßgabe einen weiteren erheblichen Vorteil, der sich erschließt, wenn man das Fallbeispiel der Nachrüstung von bestehenden Altanlagen betrachtet:

Unterstellt man eine typische Ausgangssituation, bei der in einem Gebäude ein Heizkessel und ein Wärmespeicher untergebracht sind und soll diese Anlage nun zum Beispiel um eine Wärmepumpe und/oder eine Solaranlage ergänzt werden, so besteht die bisher übliche Vorgehensweise darin, eine Wärmepumpe und/oder eine Solaranlage zu beschaffen, die neben der Schalteinheit zur Steuerung wärmeerzeugerinterner Abläufe stets auch eine eigene Zentralregeleinheit umfasst, die mit der Zentralregeleinheit des Heizkessels kommuniziert. Problematisch an dieser Kommunikation ist allerdings, dass damit letztlich zwei (oder sogar drei) Zentralregeleinheiten vorhanden sind, die zudem, weil sie hierfür auch nicht ausgelegt sind, nicht zur gegenseitigen Abstimmung ihres Regelungsverhaltens in der Lage sind. So hat zum Beispiel der Regler des Heizkessels höchstens über den Wärmespeicher Informationskontakt zum Regler der Solaranlage, aber eben keinen echten Einfluss auf dessen Regelverhalten. Je nach hydraulischer Schaltung kann es sogar sein, dass bei den bisher üblichen Regelungs- und Verschaltungskonzepten ein Heizkessel einen vorhandenen Wärmespeicher nicht aufladen kann, weil hierfür ausschließlich die nachgerüstete Wärmepumpe zuständig ist.

Integriert man nun eine Zentralregeleinheit zum Beispiel in eine nachzurüstende Wärmepumpe, so kann diese, nachdem der Betreiber, der über ein geeignetes Eingabemenü geführt wird, den konkreten Hydraulikverschaltungsplan in ihr abgespeichert hat, die vollständige Kontrolle über die gesamte Heizungsanlage übernehmen, und zwar ohne, dass es erforderlich wäre, eine insgesamt übergeordnete, separat zu installierende Zentralregeleinheit wie die Vitotronic® 333 vorzusehen.

Da eine solche Zentralregeleinheit letztlich aus wenigen elektronischen Bauteilen, vorallem aber aus Software besteht, ist darüber hinaus vorteilhaft vorgesehen, stets bei allen neuen Wärmeerzeugern (also Heizkesseln, Wärmepumpen, Solaranlagen usw.) eine solche Zentralregeleinheit zu integrieren, da es auf diese Weise möglich ist, lediglich durch Nachkauf des nachzurüstenden Wärmeerzeugers auch gleich die für die neu entstehende Gesamtanlage erforderlich Regelung bereit zu stellen.

Dabei werden die Wärmeerzeuger letztlich einfach durch eine Art standardisiertes Netzwerkkabel miteinander über eine Standardschnittstelle verbunden und betrieben. Sollte es dabei zufällig mehrere Zentralregeleinheiten geben (zum Beispiel, weil sowohl eine Wärmepumpe als auch eine Solaranlage mit Zentralregeleinheit nachgerüstet wurde), wird eine als die entscheidende definiert und die übrigen abgeschaltet bzw. einfach ignoriert. Es entsteht auf diese Weise eine Heizungsanlage mit Wärmeerzeugern, bei denen letztlich die Schalteinheiten zur Steuerung wärmeerzeugerinterner Abläufe über Netzwerkverbindungen mit einer in einem der Wärmeerzeuger angeordneten Zentralregeleinheit verbunden sind. Der Kauf einer in einem separaten Gehäuse angeordneten Zentralregeleinheit entfällt, was offensichtlich die Kosten für die Nachrüstung einer bestehenden Heizungsanlage erheblich senkt.

Andere vorteilhafte Weiterbildungen der erfindungsgemäßen Heizungsanlage ergeben sich aus den abhängigen Patentansprüchen.

Die erfindungsgemäße Heizungsanlage einschließlich ihrer vorteilhaften Weiterbildungen gemäß der abhängigen Patentansprüche wird nachfolgend anhand der zeichnerischen Darstellung verschiedener Ausführungsbeispiele näher erläutert.

Es zeigt schematisch
- Figur 1: eine Heizungsanlage gemäß dem vorbeschriebenen Stand der Technik;
- Figur 2: die erfindungsgemäße Heizungsanlage mit zwei Wärme- erzeugern, die jeweils eine übergeordnete Zentral- regeleinheit aufweisen;
- Figur 3: die erfindungsgemäße Heizungsanlage mit einem Wär- meerzeuger, der eine Einzelregeleinheit aufweist, und einen nachgerüsteten Wärmeerzeuger, der eine übergeordnete Zentralregeleinheit umfasst;
- Figur 4: eine Zentralregeleinheit gemäß dem Stand der Tech- nik mit zwei Hauptprozessoren; und
- Figur 5: eine erfindungsgemäße Zentralregeleinheit mit einem einzigen Hauptprozessor.

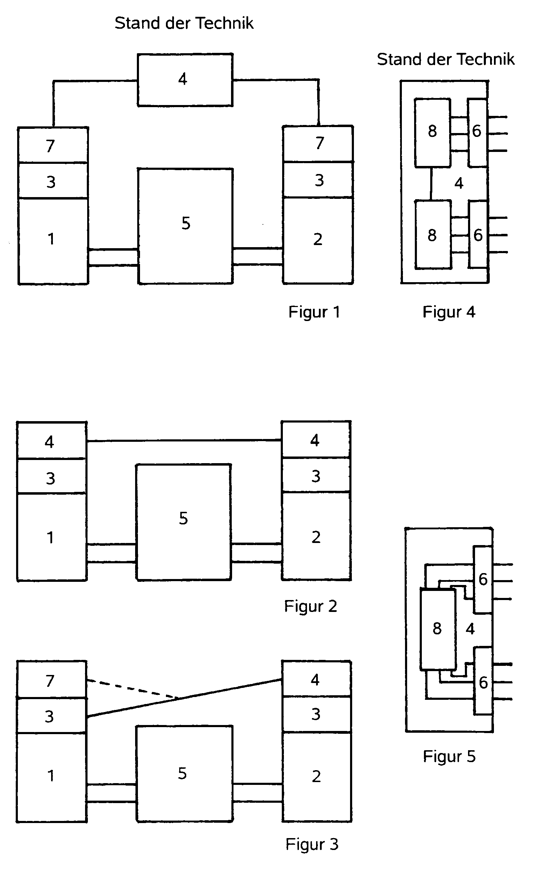

In Figur 1 ist zunächst eine nach dem Stand der Technik bekannte Heizungsanlage dargestellt. Diese besteht aus zwei Wärmeerzeuger 1, 2 (zum Beispiel ein Gasheizkessel und eine Wärmepumpe), die jeweils eine Schalteinheit 3 zur Steuerung wärmeerzeugerinterner Abläufe aufweisen. Darüber hinaus weist jeder Wärmeerzeuger 1, 2 eine Einzelregeleinheit 7 auf, die zur Regelung des einzelnen Wärmeerzeugers 1, 2 dient. Diese Einzelregeleinheit 7 steht in engem Kontakt mit der Schalteinheit 3 (zum Beispiel der Feuerungsautomat eines Heizkessels), die, wie erwähnt, nicht zur Regelung, sondern nur zur elektrischen Verschaltung der einzelnen Komponenten des Wärmeerzeugers 1, 2 dient. Jede Einzelregeleinheit 7 ist mit einer Software ausgerüstet, die speziell auf die Charakteristiken des jeweiligen Wärmeerzeuger 1, 2 zugeschnitten ist. Insbesondere kennt die Software der Einzelregeleinheit 7 des einen Wärmeerzeugers 1 nicht die Charakteristiken des anderen Wärmeerzeugers 2, sprich es handelt sich jeweils um wärmeerzeugerspezifische Software, die jeweils in einem Hauptprozessor abgespeichert ist.

Um die beiden Wärmeerzeuger 1, 2 miteinander zu verknüpfen, ist nach bekanntem Stand der Technik jede Schalteinheit 3 (über die Einzelregeleinheit 7) mit einer übergeordneten Zentralregeleinheit 4 (zur Koordination des hydraulischen Zusammenwirkens) der Wärmeerzeuger 1, 2 verbunden ist. Darüber hinaus ist die Zentralregeleinheit 4 zur initialen Abspeicherung eines Hydraulikverschaltungsplans der Wärmeerzeuger 1, 2 ausgebildet.

Mit Verweis auf die beiden erfindungsgemäßen Ausführungsformen gemäß den Figuren 2 und 3 ist zunächst festzustellen, dass auch diese beiden Heizungsanlagen zwei Wärmeerzeuger 1, 2 aufweisen, die jeweils eine Schalteinheit 3 zur Steuerung wärmeerzeugerinterner Abläufe aufweisen, wobei jede Schalteinheit 3 mit einer übergeordneten Zentralregeleinheit 4 zur Koordination des hydraulischen Zusammenwirkens der Wärmeerzeuger 1, 2 verbunden ist, wobei die Zentralregeleinheit 4 zur initialen Abspeicherung eines Hydraulikverschaltungsplans der Wärmeerzeuger 1, 2 ausgebildet ist.

Für jede beliebige Ausführungsform der erfindungsgemäße Heizungsanlage ist nun zum Beispiel mit Verweis auf Figur 2 und 3 wesentlich, dass mindestens einer der Wärmeerzeuger 1, 2 die Zentralregeleinheit 4 als integralen Bestandteil aufweist.

In Figur 2 weisen beide Wärmeerzeuger 1, 2 eine solche Zentralregeleinheit 4 auf. Bei diesem Ausführungsbeispiel handelt es sich somit typischerweise um eine Heizungsanlage, die aus erfindungsgemäßen Wärmeerzeugern 1, 2 mit Zentralregeleinheit 4 aufgebaut ist. Wie eingangs erwähnt, übernimmt im dargestellten Fall eine der beiden Zentralregeleinheiten 4 die Kontrolle über das Gesamtsystem, während die andere Zentralregeleinheit 4 letztlich nur noch dazu dient, die Informationen von der Schalteinheit 3 weiter zu leiten.

Figur 3 zeigt die typische Situation bei der Nachrüstung einer bestehenden Alt-Heizungsanlage. Der Wärmeerzeuger 1 (zum Beispiel ein Heizkessel) weist einerseits eine Schalteinheit 3 und andererseits eine Einzelregeleinheit 7 auf. Der Wärmeerzeuger 2 (zum Beispiel eine Wärmepumpe oder eine Solaranlage, aber auch ein weiterer Heizkessel ist möglich [Kaskadenlösung]) wird nunmehr nachgerüstet. Da dieser erfindungsgemäß nicht nur eine Einzelregeleinheit 7, sondern eine übergeordnete Zentralregeleinheit 4 umfasst, kann dieses nachgerüstete Gerät direkt die Regelung der Gesamtanlage übernehmen. Dazu muss die Zentralregeleinheit 4 lediglich mit dem Warmeerzeuger 1 bzw. der Schalteinheit 3 oder (gestrichelt dargestellt) mit der Einzelregeleinheit 7 verbunden werden.

Erfindungsgemäß kann also eine zusätzliche, in einem separaten Gehäuse angeordnete Zentralregeleinheit 4 entfallen, wobei auf weitere Vorteile der erfindungsgemäßen Zentralregeleinheit 4 weiter unten noch genauer eingegangen wird.

Zunächst ist noch der in den Figuren 1 bis 3 dargestellte, an sich natürlich bekannte Wärmespeicher 5 zu erläutern. Dabei handelt es sich zum Beispiel um einen so genannten bivalenten Warmwasserspeicher, dem über die beiden Wärmeerzeuger 1, 2 Wärme zuführbar ist. Da häufig die Verschaltung der Heizungsanlage nicht so einfach, wie dargestellt, ausgebildet ist, ist besonders bevorzugt vorgesehen, dass die Zentralregeleinheit 4 zur Koordination des hydraulischen Zusammenwirkens und vorzugsweise zur initialen Abspeicherung eines Hydraulikverschaltungsplans sowohl der Wärmeerzeuger 1, 2 als auch des Wärmespeichers 5 ausgebildet ist.

Weiterhin zeigt Figur 4 eine Zentralregeleinheit 4 gemäß dem bekannten, vorerläuterten Stand der Technik. Diese weist mehrere (hier der Einfachheit halber nur zwei dargestellt) Schnittstellen 6 zum Anschluss von wahlweise Schalt- 3 und/oder Einzelregeleinheiten 7 auf. Dabei ist jeder Schnittstelle 6 ein Prozessor 8 zugeordnet, auf dem wärmeerzeugerspezifische Charakteristiken abgespeichert sind. Die Prozessoren 8 selbst sind ebenfalls miteinander verbunden, um eine Regelung der Gesamtanlage zu ermöglichen.

Gemäß einer besonders bevorzugten, erfindungsgemäßen Ausführungsform der Zentralregeleinheit 4 ist nach Figur 5 und im Unterschied zur allgemein üblichen Lösung nach Figur 4 vorgesehen, dass die Zentralregeleinheit 4 einen mit allen Schnittstellen 4 mindestens phasenweise verbundenen Hauptprozessor 8 aufweist. Erfindungsgemäß wird somit ein etwas größerer Hauptprozessor 8 vorgesehen, der aber insgesamt kostengünstiger als mehrere, kleinere Hauptprozessoren 8 ist (siehe Figur 4).

In diesen Hauptprozessor 8 ist dabei eine verschiedene Charakteristiken von Wärmeerzeugern 1, 2 berücksichtigende Software gespeichert, wobei insbesondere bevorzugt vorgesehen ist, dass die verschiedenen Charakteristiken schichtartig im Hauptprozessor 8 gespeichert und abrufbar sind. Der besondere Vorteil dieser Lösung wird weiterhin durch die Maßgabe deutlich, dass die im Hauptprozessor 8 gespeicherte Software aus mindestens zwei Modulen besteht, wobei das erste Modul zur Übernahme allgemeiner, wärmeerzeugerunspezifischer Regelungsfunktionen und das zweite Modul zur Aufnahme und Ausführung mehrerer, wärmeerzeugerspezifische Charakteristiken ausgebildet ist. Ferner kann auch noch ein drittes Modul zur Aufnahme und Ausführung wärmeverbraucherspezifischer Charakteristiken (Warmwasserspeicher, Heizkreis etc.) vorgesehen sein. Im Unterschied zur Lösung nach Figur 4 benötigt der Hauptprozessor 8 gemäß Figur 5 nämlich nicht einfach die X-fache Menge an Speicherplatz (wobei X die Anzahl der Hauptprozessor 8 in Figur 4 darstellt), sondern weniger, da die wärmeerzeugerunspezifischen Regelungsfunktionen gewissermaßen in einfacher Form im ersten Modul zusammengefasst ausgelagert sind, während die wärmeerzeugerspezifischen Charakteristiken im zweiten Modul enthalten sind. Während also bei der Lösung nach Figur 4 die wärmeerzeugerunspezifischen Regelungsfunktionen in jedem Hauptprozessor 8 hinterlegt sind, kann hierauf bei der Lösung nach Figur 5 verzichtet werden.

### Bezugszeichenliste

- 1: Wärmeerzeuger
- 2: Wärmeerzeuger
- 3: Schalteinheit
- 4: Zentralregeleinheit
- 5: Wärmespeicher
- 6: Schnittstellen
- 7: Einzelregeleinheit
- 8: Hauptprozessor

## Patentansprüche

1. Heizungsanlage, umfassend mindestens zwei Wärmeerzeuger (1, 2), die jeweils mindestens eine Schalteinheit (3) zur Steuerung wärmeerzeugerinterner Abläufe aufweisen, wobei jede Schalteinheit (3) mit einer übergeordneten Zentralregeleinheit (4) zur Koordination des hydraulischen Zusammenwirkens der Wärmeerzeuger (1, 2) verbunden ist, wobei die Zentralregeleinheit (4) zur initialen Abspeicherung eines Hydraulikverschaltungsplans der Wärmeerzeuger (1, 2) ausgebildet ist,
**dadurch gekennzeichnet,**
**dass** mindestens einer der Wärmeerzeuger (1, 2) die Zentralregeleinheit (4) als integralen Bestandteil aufweist.

2. Heizungsanlage mit mindestens einem Wärmespeicher (5) nach Anspruch 1,
**dadurch gekennzeichnet,**
**dass** die Zentralregeleinheit (4) zur Koordination des hydraulischen Zusammenwirkens und vorzugsweise zur initialen Abspeicherung eines Hydraulikverschaltungsplans der Wärmeerzeuger (1, 2) und des Wärmespeichers (5) ausgebildet ist.

3. Heizungsanlage nach Anspruch 1 oder 2, wobei die Zentralregeleinheit (4) mehrere Schnittstellen (6) zum Anschluss von wahlweise Schalt- (3) und/oder Einzelregeleinheiten (7) aufweist,
**dadurch gekennzeichnet,**
**dass** die Zentralregeleinheit (4) einen mit allen Schnittstellen (6) mindestens phasenweise verbundenen Hauptprozessor (8) aufweist.

4. Heizungsanlage nach Anspruch 3,
**dadurch gekennzeichnet,**
**dass** im Hauptprozessor (8) eine verschiedene Charakteristiken von Wärmeerzeugern (1, 2) berücksichtigende Software gespeichert ist.

5. Heizungsanlage nach Anspruch 4,
**dadurch gekennzeichnet,**
**dass** die verschiedenen Charakteristiken schichtartig im Hauptprozessor (8) gespeichert und abrufbar sind.

6. Heizungsanlage nach Anspruch 4 oder 5,
**dadurch gekennzeichnet,**
**dass** die im Hauptprozessor (8) gespeicherte Software aus mindestens zwei Modulen besteht, wobei das erste Modul zur Übernahme allgemeiner, wärmeerzeugerunspezifischer Regelungsfunktionen und das zweite Modul zur Aufnahme und Ausführung mehrerer, wärmeerzeugerspezifische Charakteristiken ausgebildet ist.

7. Heizungsanlage nach Anspruch 6,
**dadurch gekennzeichnet,**
**dass** ein drittes Modul zur Aufnahme und Ausführung wärmeverbraucherspezifischer Charakteristiken ausgebildet ist.
